# EUROPEAN PATENT APPLICATION

(11) **EP 1 600 329 A2**
(43) Date of publication of application: **30.11.2005**
(21) Application number: 05253203.3
(22) Date of filing: 25.05.2005
(51) Int. Cl.: B60R 5/04, B60R 7/02

(54) **Support apparatus**

(30) Priority: 25.05.2004 GB 0411743
(71) Applicant: Nissan Technical Centre Europe Ltd, Bedfordshire MK43 0DB (GB)
(72) Inventor: Snowdon, Norman Nissan Techn. Centre Europe Ltd, Bedfordshire MK43 0DB (GB); Callegari, Stewart Nissan Techn. Centre Europe Ltd, Bedfordshire MK43 0DB (GB)
(74) Representative: Holmes, Matthew William

(57) **Abstract**

An apparatus for supporting an object in or on a vehicle includes a first face formed from, covered with or trimmed in a plastics material and a second, opposing face formed from, covered with or trimmed in a non-plastics material. The first face is provided with one or more anti-slip regions for hindering movement of the object across the first surface and the apparatus is mountable within the vehicle with either the first face uppermost or the second face uppermost.

## Description

The present invention relates to a support apparatus for supporting an object in or on a vehicle, such as an automobile or the like. The invention is more particularly concerned with a support apparatus having a load carrying surface and to a vehicle having such a support apparatus or load carrying surface.

It is well known for vehicles, such as automobiles and commercial vehicles, to include a luggage compartment or the like for the carrying of goods, luggage or other objects. In general, such luggage compartments have a substantially flat floor defining a load carrying surface on which the objects are placed for transportation. In passenger vehicles such as automobiles, the luggage compartment is frequently termed a "boot" or a "trunk" and is usually located at the rear of the vehicle, immediately behind the rear seats.

The sides and floor of the luggage compartment are usually covered or "trimmed" in a fabric or carpet-type material which is similar, or identical, to that with which the passenger compartment is trimmed. This arrangement provides the advantage that the luggage compartment matches the interior trim of the vehicle and is therefore aesthetically pleasing. Objects placed in the luggage compartment are less likely to move around during vehicle manoeuvring, owing to the relatively high coefficient of friction of the trim fabric, and therefore generate little noise or rattle. A disadvantage of the arrangement, however, is that the fabric tends to retain dust, mud and moisture from dirty objects placed in the luggage compartment and is therefore difficult to clean once soiled.

To address these disadvantages, some vehicles are provided with untrimmed luggage compartments. In such arrangements, the sides and floor of the luggage compartment are finished in a hard-wearing plastics material, such as ABS, PTFE, polypropylene (PP) or polyurethane (PUR). Neither the sides nor the floor of the luggage compartment are covered with any type of fabric or material.

This arrangement provides the advantage that, since the plastics material is wipeable, any soiling of the luggage compartment can be easily removed. Dust, mud or moisture collected by the sides or floor of the luggage compartment from dirty or wet objects placed therein can be wiped away without leaving any significant staining or marking of the plastic. Untrimmed luggage compartments are becoming increasingly common in passenger vehicles, particularly in so-called "lifestyle" or "SUV" vehicles often used in connection with outdoor activities which involve the transportation of dirty, muddy or wet objects.

However, this type of arrangement suffers from the disadvantage that the plastic surface of the luggage compartment floor has a relatively low friction coefficient. As a result, articles, objects or luggage carried in the luggage compartment are liable to slide around the luggage compartment relatively freely during vehicle manoeuvring. This can lead to damage of both the object and the vehicle, or to the spillage of luggage contents into the luggage compartment.

In addition, articles placed in the luggage compartment are prone to vibrate whilst the vehicle is moving. In a trimmed luggage compartment, object vibration, and hence rattle noise, is significantly damped by the trim fabric. In an untrimmed luggage compartment, however, no such damping is provided and rattle noise from vibrating objects can become extremely irritating to the vehicle occupants.

It has been proposed to provide vehicles having untrimmed luggage compartments with straps or ties for securing objects within the luggage compartment in order to reduce object movement and vibrational rattle.

Naturally, however, these devices add to the cost of the vehicle and they are often time-consuming to fit, being inconvenient for the vehicle user who is required to utilise them every time objects are to be transported in the vehicle luggage compartment.

It is an aim of the present invention to address this and other disadvantages associated with untrimmed luggage compartments. Embodiments of the invention provide an apparatus for supporting an object or article in or on a vehicle. Other embodiments of the invention provide a vehicle having such an apparatus.

According to one aspect of the present invention, therefore, there is provided an apparatus for supporting an object in or on a vehicle, the apparatus including a first face formed from, covered with or trimmed in a plastics material and a second, opposing face formed from, covered with or trimmed in a non-plastics material, wherein the first face is provided with one or more anti-slip regions for hindering movement of said object across said first surface and wherein the apparatus is mountable within the vehicle with either the first face uppermost or the second face uppermost.

In one embodiment, the first face defines a load carrying surface of a luggage compartment of the vehicle or of a shelf mountable in or above a luggage compartment of the vehicle.

The or each anti-slip region may comprise a raised region disposed on the first face. The or each raised region may be formed integrally with the first face.

In one embodiment, the apparatus includes a pad attached to the upper surface of the raised region, the pad being formed from a material having a higher coefficient of friction than that of the raised region. In another embodiment, the or each raised region comprises a pad attached to the first face, the pad being formed from a material having a higher coefficient of friction than that of the first face.

The second face may be formed from, covered with or trimmed in a fabric or carpet-type material. The fabric or carpet-type material may be similar or substantially identical to the material used to trim the luggage compartment and/or passenger compartment of the vehicle.

The or each anti-slip region may comprise a pad which is movable relative to the surface between a first, non-use position and a second, use position. In the first, non-use position, the or each pad may be recessed into, or substantially flush with, the surface such that the low coefficient of friction of the surface is substantially unaffected. On the other hand, in the second, use position, the or each pad may be raised above the surface thereby to reduce the overall effective coefficient of friction of the surface.

In one embodiment, the surface is provided with a plurality of apertures having a respective pad located therein, the pad being movable between the first position in which an upper surface of the pad is recessed into the aperture or is substantially flush with the surface and a second position in which the pad is raised above the load carrying surface.

The or each pad may be formed from a material which has a relatively high coefficient of friction such as rubber, PVC or low density foam.

In one embodiment, the apparatus further comprises lift means for raising the or each pad from the first position to the second position. The lift means may comprise a hinged arm disposed beneath the or each pad, the arm being arranged to pivot between a position in which it lies generally parallel to the surface and a position in which it is inclined relative to the surface thereby to raise the corresponding pad.

The or each arm may be connected to a cable the arrangement being such that movement of the cable causes the or each arm to adopt the second position.

The invention provides the advantage that, on one side, the load carrying surface retains the easy-clean properties provided by the surfaces of the prior untrimmed luggage compartments whilst also providing an anti-slip effect and on the other side, the load carrying surface is substantially identical in appearance to conventional trimmed luggage compartment surfaces.

The present invention will now be described, by way of example only, with reference to the accompanying drawings in which:
Figure 1 illustrates a part of a known vehicle luggage compartment;
Figure 2 illustrates a part of a vehicle luggage compartment embodying a first form of the invention;
Figure 3 illustrates a section through a floor of a luggage compartment embodying a second form of the invention in a first position;
Figure 4 illustrates a section through the floor of Figure 3 showing the invention in a second position;
Figure 5 illustrates a part of a vehicle luggage compartment embodying the floor of Figure 4;
Figure 6 illustrates an alternative form of apparatus embodying the invention;
Figure 7 illustrates a further alternative form of apparatus embodying the invention; and
Figure 8 illustrates a still further form of apparatus embodying the invention.

In the drawings, as far as possible, like reference numerals indicate like parts.

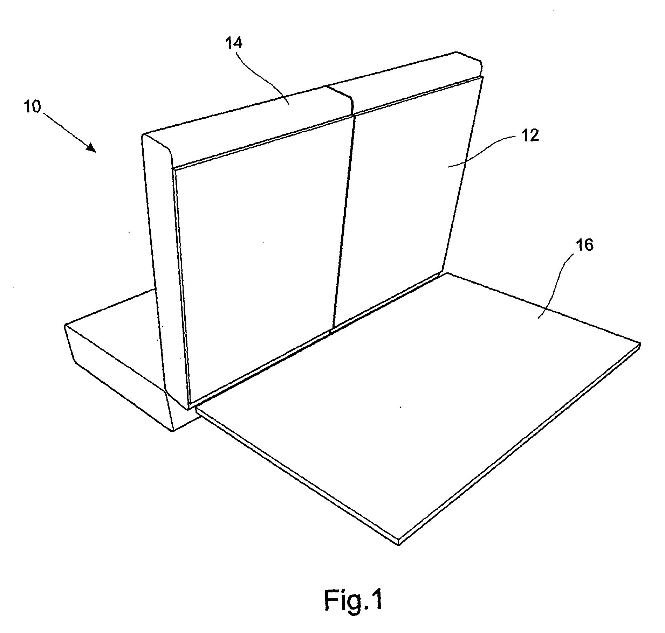

Referring firstly to Figure 1, this shows a perspective view of a known vehicle luggage compartment. The luggage compartment, shown generally at 10, has a front wall defined by the rear surface 12 of a rear row of seats 14 of the vehicle and a floor 16 constituting a load carrying surface for the supporting of goods, luggage or other objects in the luggage compartment. The sides and rear wall of the luggage compartment, the latter usually defined by a rear hatch or tailgate of the vehicle, are not shown for clarity.

As illustrated, the floor 16 of the luggage compartment, defining the load carrying surface, is generally planar and is formed from a rigid, hardwearing plastics material such as ABS, PTFE, PP or PUV. The surface 16 is not trimmed with any kind of fabric or carpet-like material but instead is merely finished in the desired colour and texture.

Advantageously, the plastics material from which the sides and floor of the luggage compartment are formed is impermeable and generally water resistant and so does not tend to absorb dust, mud or moisture from dirty objects carried in the luggage compartment. Furthermore, the plastics material is also easily wipeable so that any dirt which is retained in the luggage compartment after removal of the objects is easy to clean away. In general, therefore, the surfaces of the luggage compartment are less prone to deteriorate over time with heavy use compared with conventional trimmed surfaces.

A disadvantage of this arrangement, however, is that the plastic surfaces have a relatively low coefficient of friction. As a result, goods, luggage or other objects placed on the floor 16 have a tendency to slide around the luggage compartment 10 whilst the vehicle is in motion. This can cause damage both to the objects and to the vehicle and, in some cases, can lead to spillage of contained matter into the luggage compartment. A further problem is that the plastics material provides little damping either for noise or vibration and object rattle within the luggage compartment can be a source of annoyance for vehicle occupants.

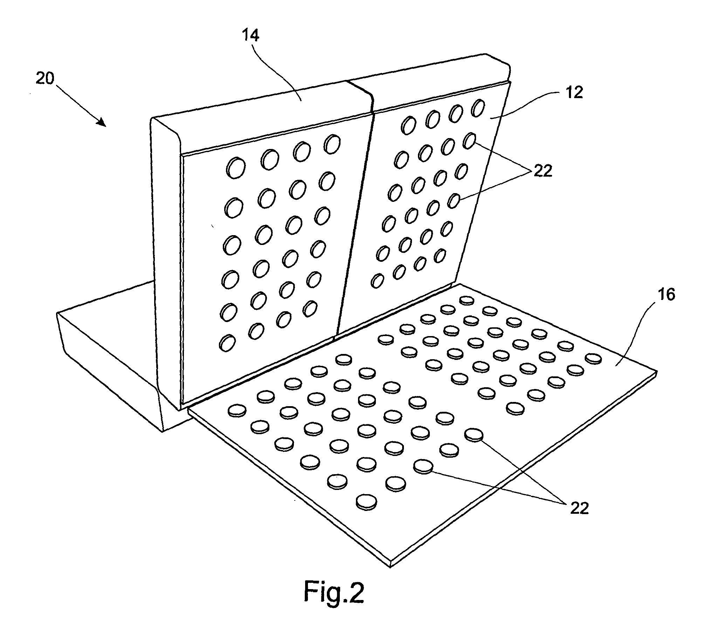

Referring next to Figure 2, a vehicle luggage compartment having a load carrying surface embodying the invention is shown, again is perspective view, generally at 20. The compartment is similar in many respects to that of Figure 1 having front, rear and side walls and a floor defining a load carrying surface all of which are formed from a relatively rigid, hard wearing plastics material and are untrimmed.

In contrast with the prior art arrangement shown in Figure 1, however, the floor 16 of the luggage compartment 20 is provided with a plurality of anti-slip regions or pads 22. The pads 22 are arranged regularly across the surface of the floor 16 in a substantially grid-like pattern. Each pad 22 is generally circular, though this shape is not essential, and is formed from a material with a relatively high coefficient of friction. In the illustrated embodiment, the pads 22 are made from a rubber material such as poly vinyl chloride (PVC).

Each pad 22 is fixedly attached or bonded to the floor 16 and sits in a shallow recess (not shown) formed therein. The thickness of the pads 22 is such that the upper surface of each pad 22 is raised above the upper surface of the floor 16 by a predetermined amount. In the illustrated embodiment, the depth of the recess in which each pad 22 sits is less than the thickness of the pad itself by approximately 1mm to 5mm so that the upper surface of the pad 22 is raised above the upper surface of the floor 16 by a corresponding amount. Locating each pad 22 in a recess assists in retaining the pads 22 in the desired position on the floor 16.

In use, objects placed on the floor 16 of the vehicle luggage compartment are retained in position during movement of the vehicle by means of the frictional force generated between the object and the anti-slip pads 22. This frictional force is substantially higher than the frictional force generated between the object and the load carrying surface of the prior art arrangement shown in Figure 1. The rubber material from which the pads 22 are formed is compliant and resilient and the pads therefore additionally act to damp both vibration of the object and noise from object rattle.

Furthermore, the load carrying surface 16 retains the easy-clean properties of the prior art arrangement. The anti-slip pads 22, being formed from rubber or, alternatively, from a material such as low density foam (LDF), are generally water resistant and are thus fully washable and wipeable. The arrangement therefore combines the benefits of both conventionally trimmed luggage compartments and existing untrimmed luggage compartments and thus provides substantial advantages over the prior art individually.

In the embodiment of Figure 2, it can be seen that the rear surface 12 of the rear seats 14 has a similar plastic surface. The purpose of this feature is to provide the user with the option of increasing the effective volume of the luggage compartment by folding the back cushion of the rear seats 14 forward to form an extended load carrying surface of the luggage compartment. This feature is well known and common in many passenger vehicles and is also shown in Figure 1. In the apparatus of Figure 2, however, the surface 12 is provided with pads 22 substantially identical to those provided on the floor 16 so that the anti-slip capability is extended across the entire load carrying surface of the luggage compartment.

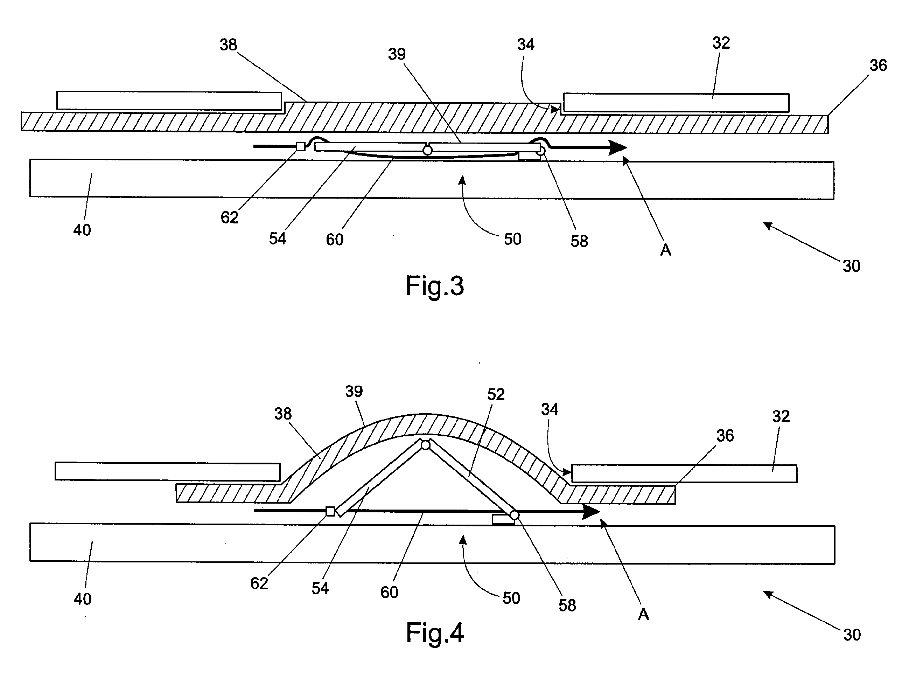

Referring next to Figures 3 and 4, these illustrate a cross section through a luggage compartment floor embodying a second form of the invention. The floor, defining a load carrying surface and referred to generally at 16, comprises an upper support member in the form of a rigid or semi-rigid layer 32 formed from a plastics material such as ABS, PTFE, PP or PUV. The upper support member 32 has a plurality of circular apertures 34 extending therethrough, only one of which is shown in Figures 3 and 4.

A rubber sheet 36 is attached to the underside of the upper support member 32 and extends across most or all of the lower surface thereof. The rubber sheet 36 is provided with a plurality of discrete thickened regions 38 which coincide, in size, position and number, with the apertures 34 in the upper support member 32 so that each thickened region is effectively located in a respective aperture 34. In the illustrated embodiment, the thickness of the thickened regions 38 is such that the rubber sheet 36 does not extend fully through the apertures 34 in the upper support member 32. The exposed upper surface 39 of each thickened region thus lies slightly below the upper surface of the upper support member 32.

Beneath the rubber sheet 36 is disposed a lower support member in the form of a second, generally rigid board 40. It will be understood that the rubber sheet 36 is therefore sandwiched between the upper and lower support members 32, 40 and that, together, these make up the floor 16 of the luggage compartment defining the load carrying surface.

The floor 16 also includes a plurality of lifting mechanisms, each mechanism being disposed beneath a corresponding thickened region 38 of the rubber sheet 36. Each mechanism 50 comprises first and second elongate arms 52, 54 which are pivotally connected together via a one-way hinge 56. The first arm 52 is additionally hinged at its opposite end to the upper surface of the lower support member 40 by a second hinge 58.

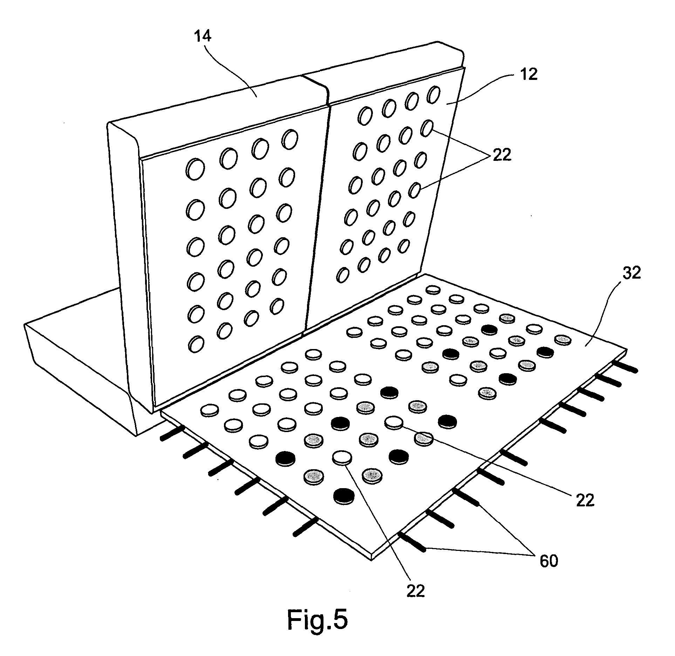

An aperture (not shown) extends through the second arm 54 adjacent its free end. A similar aperture extends through the first arm 52 adjacent to the second hinge 58. A cable or wire 60, disposed between the rubber sheet 36 and the lower support member 40, passes downwardly through the aperture in the second arm 54, running under the lifting mechanism 50 and passing upwardly though the aperture in the first arm 52. The wire 60 continues to run between the rubber sheet 36 and the lower support member 40 and protrudes from the edge of the load carrying surface, as best illustrated in Figure 5.

A stop 62 is fixed to a point on the wire 60 beyond the second arm 54 so that when the wire 60 is pulled in a direction shown by the arrow A, the stop 62 exerts an axial force on the end of the second arm 54. Since the mechanism 50 is fixed in place relative to the board 40, the axial force applied to the mechanism 50 by the stop 62 causes the first and second arms 52, 54 to be pivoted upwardly thereby raising the thickened region 38 of the rubber sheet 36 through the corresponding aperture 34 in the upper support member, as shown in Figure 4. The thickened region 38 of the rubber sheet 36 therefore protrudes through the aperture 34 so that the upper surface 39 thereof is raised above the upper surface of the upper support member 32 and thus defines one of the raised, anti-slip pads 22 shown in Figure 2.

It will be understood that the amount by which the pad 22 is raised will be dependent upon the amount by which the wire 60 is drawn. It is thus possible to adjust the effective height of the pad 22 by varying the amount by which the wire 60 is drawn. For example, by drawing the wire 60 by a small amount, the pad 22 is only slightly raised above the surface of the upper support member 32. This may be just sufficient to provide an anti-slip effect to the load-carrying surface. On the other hand, by drawing the wire 60 further, the pads 22 are raised further above the surface of the upper support member 36 and may therefore be used to provide support for unevenly shaped article or to prevent cylindrical, spherical or wheeled objects from rolling around within the luggage compartment.

Each wire 60 may be arranged to raise a single pad 22, a plurality of pads or all of the pads provided in the load carrying surface 30. In one embodiment, for example, each wire 60 is arranged to raise a number of specific pads 22 on the load carrying surface such that by drawing individual wires, selected pads 22 can be raised above the surface of the upper support member 32. In this way, the pads 22 can be raised to form specific patterns to suit the type of object or objects being carried in the luggage compartment of the vehicle.

When the tension on the wire 60 is released, the first and second arms 52, 54 return to their original position (shown in Figure 3) so that the pads 22 are no longer raised above the surface of the upper support member 32. The arms 52, 54 may be biased towards the first, non-use position shown in Figure 3 by means of springs or other resilient mechanisms. Alternatively, the weight of the objects carried in the luggage compartment may be sufficient to cause the pads to be lowered to the first position.

With the pads 22 in their first, non-raised position shown in Figure 3, the plastic upper surface of the upper support member 32 exhibits a relatively low friction coefficient enabling goods, luggage and other objects easily to be loaded into the luggage compartment and slid across the load carrying surface into the desired position. Thereafter, however, the or each cable 60 is pulled thereby to raise the anti-slip pads 22 above the surface of the upper support member 32. This increases the effective friction coefficient of the load carrying surface and reduces or substantially eliminates movement of the objects whilst the vehicle is in motion.

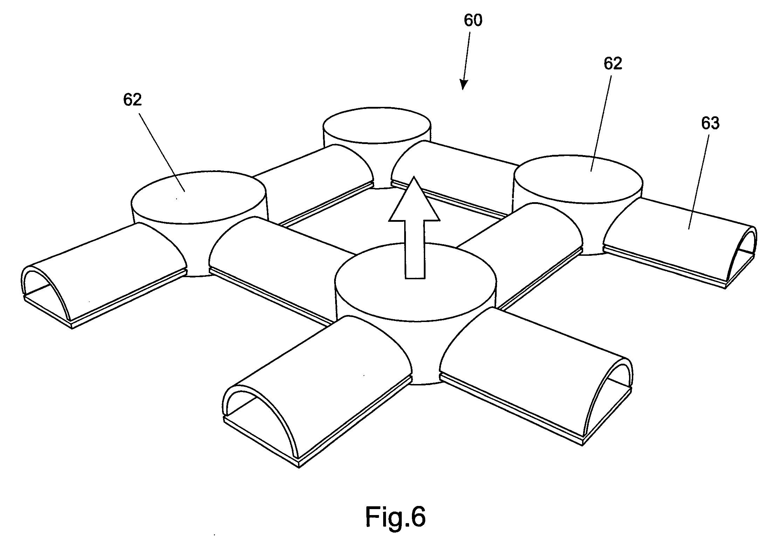

Referring next to Figure 6, an apparatus embodying an alternative form of the invention is shown generally at 60. In this embodiment, the lower board and the rubber sheet are replaced by a matrix of air bladders 62 interconnected by means of pneumatic tubes 63. Each air bladder 62 is disposed in or directly beneath a respective aperture in the upper support member (not shown) so that, when filled with pressurised air or other fluid, the bladders 62 expand and protrude through the apertures 34 above the upper surface of the upper support member. The upper surface of each bladder 62 is provided with a rubberised or other anti-slip surface.

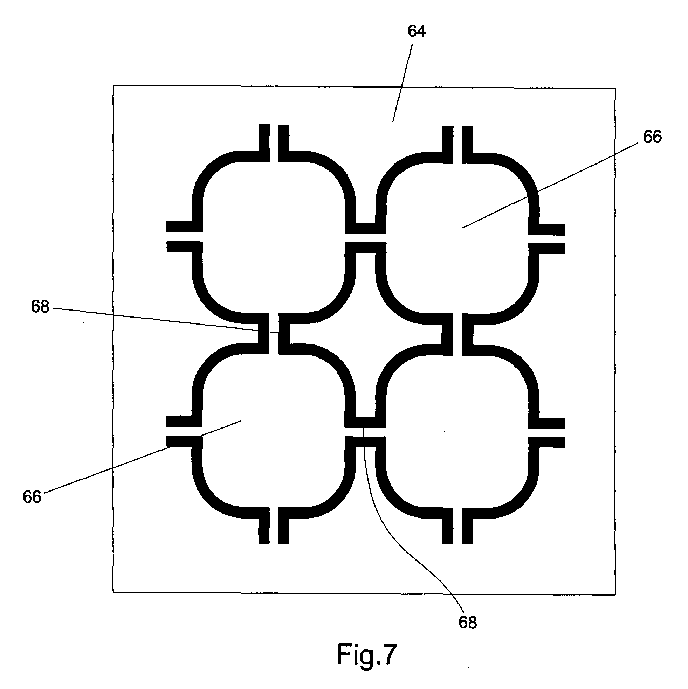

An alternative arrangement is shown in Figure 7. In this embodiment, the anti-slip pads 22 are formed by two sheets of rubber material 64 bonded together in such a was so as to form pockets or "blisters" 66, interconnected by tubes or conduits 68, which can be inflated by air or another fluid. Again, each blister 66 is located in or beneath a respective aperture in the upper support member (not shown) so that, as the blister 66 is inflated, it protrudes through the aperture 34 above the upper surface of the upper support member 32 thereby defining the raised pad 22.

It will be appreciated that the present invention addresses the problems associated with prior art systems by providing a load carrying surface for a vehicle luggage compartment which has a wipeable upper surface and a plurality of anti-slip pads disposed over the upper surface to reduce movement of objects supported by the surface.

In one embodiment of the invention, the raised pads are a substantially permanent feature of the upper surface, being bonded or otherwise attached to the surface or formed integrally therewith.

In an alternative embodiment, the pads are movable between a first, non-raised position in which they lie substantially flush with, or slightly below, the upper surface of the floor and a second position in which they are raised above the upper surface. The first position represents a loading condition in which the lower friction exhibited by the load carrying surface facilitates the loading of objects and luggage into the luggage compartment. The second position represents a load carrying position whereby the increased friction coefficient reduces or substantially prevents movement of objects across the luggage compartment floor whilst the vehicle is in motion.

The pads may be integrally formed with the load carrying surface, in which case they may be formed from a hardwearing, durable plastics material such as ABS, PTFE, PP or PUR. Alternatively, the pads may be formed separately from the surface and fabricated from a material having a relatively high coefficient of friction such as a rubber material or low density foam.

Advantages of the invention are that the load carrying surface has a high quality finish, is hard wearing and easy to clean.

In the embodiment of Figures 3 to 5, selected and/or individual pads 22 can be raised by drawing on the relevant wire. Drawing of the wire may be achieved by means of a handle, motor or any other suitable drive mechanism.

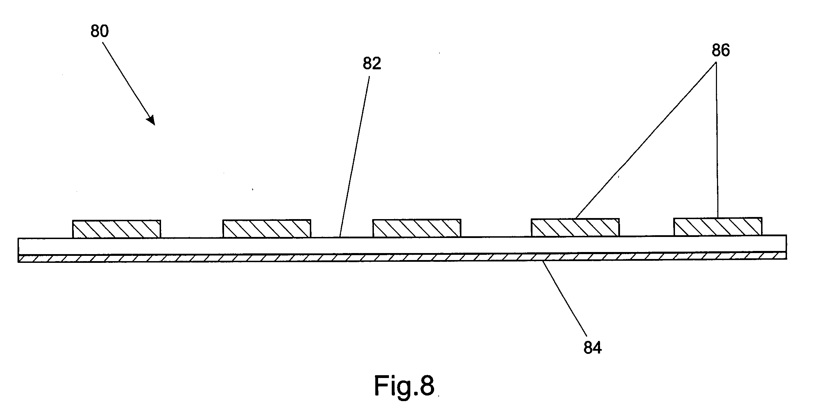

A further embodiment of the invention is shown in Figure 8. In this embodiment, the apparatus, referred to generally at 80, forms either the floor of the luggage compartment or, alternatively, a shelf (such as a parcel shelf) which may be supported in or above the luggage compartment and on which items may be placed.

The apparatus 80 comprises a rigid or semi-rigid sheet 81 having upper and lower opposing faces 82, 84. The upper face 82 of the sheet 81 is formed from, covered with or trimmed in a plastics type material (such as ABS, PTFE, PP, PUV etc.) having a relatively low coefficient of friction and is provided with a plurality of anti-slip regions, in the form of a matrix of pads 86. The pads 86 may take the form of the pads described in any of the previous embodiments.

The lower face 84 of the sheet is formed from, covered with or trimmed in a different material and is not provided with the anti-slip regions. In the illustrated embodiment, for example, the lower face 84 is trimmed in a material similar to that of the side walls of the luggage compartment, such as a fabric or carpet-type material.

The apparatus 80 is adapted so as to be reversible within the luggage compartment of the vehicle. In one embodiment, for example, the apparatus constitutes the luggage compartment floor and is adapted to be removably seated therein in either of two orientations: a first orientation, whereby the first surface having the anti-slip regions faces upwardly or a second orientation, whereby the second surface having the carpet-type trim faces upwardly. The user is able to remove the apparatus from the luggage compartment, reverse it and replace it both simply and easily, thus permitting the surface of the luggage compartment floor to be changed to suit the nature of the objects placed thereon.

It will be appreciated that this embodiment may be used alone or in conjunction with any other embodiment described herein.

## Claims

**1.** An apparatus (20, 80) for supporting an object in or on a vehicle, the apparatus including a first face (16, 82) formed from, covered with or trimmed in a plastics material and a second, opposing face (84) formed from, covered with or trimmed in a non-plastics material, wherein the first face (16, 82) is provided with one or more anti-slip regions (22, 86) for hindering movement of said object across said first surface and wherein the apparatus is mountable within the vehicle with either the first face uppermost or the second face uppermost.

**2.** An apparatus as claimed in claim 1 wherein the first face (16, 82) defines a load carrying surface of a luggage compartment of the vehicle or of a shelf mountable in or above a luggage compartment of the vehicle.

**3.** An apparatus as claimed in claim 1 or claim 2 wherein the or each anti-slip region (22, 86) comprises a raised region disposed on the first face (16, 82).

**4.** An apparatus as claimed in claim 3 wherein the or each raised region (22, 86) is formed integrally with the first face (16, 82).

**5.** An apparatus as claimed in claim 4 wherein the apparatus includes a pad attached to the upper surface of the raised region, the pad being formed from a material having a higher coefficient of friction than that of the raised region.

**6.** An apparatus as claimed in claim 3 wherein the or each raised region (22, 86) comprises a pad attached to the first face, the pad being formed from a material having a higher coefficient of friction than that of the first face.

**7.** An apparatus as claimed in any preceding claim wherein the second face (84) is formed from, covered with or trimmed in a fabric or carpet-type material.

**9.** An apparatus as claimed in claim 1 or claim 2 wherein the or each anti-slip region comprises a pad (22, 86) which is movable relative to the surface between a first, non-use position and a second, use position.

**10.** An apparatus as claimed in any of claim 9 further comprising lift means for raising the or each pad (22, 86) from the first position to the second position, wherein the lift means comprises a hinged arm (52, 54) disposed beneath the or each pad (22, 86), the arm being arranged to pivot between a position in which it lies generally parallel to the surface and a position in which it is inclined relative to the surface thereby to raise the corresponding pad.

**11.** An apparatus as claimed in claim 13 wherein the or each arm (52, 54) is connected to a cable (60), the arrangement being such that movement of the cable causes the or each arm to adopt the second position.
